Europäisches Patentamt

(19) European Patent Office

Office européen des brevets

(11) Veröffentlichungsnummer: **0 075 314**
**B1**

(12) **EUROPÄISCHE PATENTSCHRIFT**

(45) Veröffentlichungstag der Patentschrift:
03.09.86

(21) Anmeldenummer: **82108697.2**

(22) Anmeldetag: **21.09.82**

(51) Int. Cl.⁴: **B 01 J 23/74,** C 01 B 3/40,
C 10 G 11/04

(54) **Gamma-Aluminiumoxyd und Nickel(II)-oxyd enthaltende bifunktionelle Katalysatoren sowie Verfahren zu ihrer Herstellung und ihre Verwendung.**

(30) Priorität: 21.09.81 HU 272181

(43) Veröffentlichungstag der Anmeldung:
30.03.83 Patentblatt 83/13

(45) Bekanntmachung des Hinweises auf die Patenterteilung:
03.09.86 Patentblatt 86/36

(84) Benannte Vertragsstaaten:
AT BE CH DE FR GB IT LI LU NL SE

(56) Entgegenhaltungen:
EP-A-0 045 126
DE-A-2 250 200
DE-A-2 454 846
US-A-3 423 194
US-A-4 255 253

(73) Patentinhaber: **MTA MÜSZAKI KEMIAI KUTATO INTEZET, Schönherz u. 2, H-8200 Veszprém (HU)**

(72) Erfinder: **Szabó, János, Búzavirág u. 12, H-8200 Veszprém (HU)**
Erfinder: **Pataki, Károly, Haszkovó u. 15/a, H-8200 Veszprém (HU)**
Erfinder: **Gubicza, László, Haszkovó u. 18/h, H-8200 Veszprém (HU)**
Erfinder: **Hajdu, Rudolf, Haszkovó u. 16/c, H-8200 Veszprém (HU)**
Erfinder: **Ormós, Zoltán, Haszkovó u. 15/a, H-8200 Veszprém (HU)**
Erfinder: **Ujhidy, Aurél, Stadion u. 21/b, H-8200 Veszprém (HU)**
Erfinder: **Braun, Gero, Händelstrasse 73, D-6100 Darmstadt (DE)**
Erfinder: **Bünger, Helmut, Engelmühlenweg 2, D-6109 Mühltal 1 (DE)**
Erfinder: **Fetting, Fritz, Auf dem Sand 3, D-6109 Mühltal 1 (DE)**
Erfinder: **Heinrich, Walter, Barbarossastrasse 95, D-7000 Stuttgart (DE)**
Erfinder: **Halsig, Claus-Peter, Dr. Dipl.- Chem., Trischenstrasse 11, D-2000 Wedel (DE)**
Erfinder: **Nagy, Endre, Dr. Dipl.- Ing., Endrödi ut 38, H-8200 Veszprém (HU)**

(74) Vertreter: **Beszédes, Stephan G. Dr., Münchener Strasse 80a Postfach 1168, D-8060 Dachau (DE)**

**Beschreibung**

Die Erfindung betrifft γ-Aluminiumoxid und Nickel (II)-oxid enthaltende bifunktionelle Katalysatoren sowie ein Verfahren zu ihrer Herstellung und ihre Verwendung.

Diese Katalysatoren dienen in erster Linie der autothermen Zersetzung von Treibstoffen.

Ein Verfahren zur Verbesserung des Wirkungsgrades von Verbrennungsmotoren und zur Verminderung der durch sie hervorgerufenen Luftverschmutzung besteht darin, daß der Treibstoff, bevor er in den Verbrennungsraum gelangt, in eine Gasphase geeigneter Zusammensetzung überführt wird, wodurch im Ferbrennungsraum die explosionsartige Verbrennung mit einem besseren Wirkungsgrad (K. Christoph, W. Cartelliere, U. Pfeiffer: Motortechnische Zeitschrift 33 [1972], 391) und unter Bildung von weniger luftverschmutzenden Produkten (H.-I. Henkel: Erdöl und Kohle 27 [1979], 251) als im Falle der Verwendung von üblichen Vergasern verläuft. Die Überführung in eine Gasphase geeigneter Zusammensetzung erfolgt zweckmäßig als katalytisches Cracken des Treibstoffes durch partielle Oxidation, wobei durch Anwendung einer Luftzahl von etwa 0,1 Wasserstoff und niedere Kohlenwasserstoffe entstehen. Zur Aufrechterhaltung des autothermen Vorganges werden lediglich etwa 5% des Heizwertes der Treibstoffe verbraucht und dieser Verlust wird durch die sich aus der vollkommeneren Verbrennung der Gase ergebenden Verbesserung des Wirkungsgrades kompensiert (W. Frie: Siemens Forsch. u. Entwickl. Ber. 2 (1973), 63). Dieses Verfahren hat ferner den Vorteil, auch die Verwendung von Motortreibstoffen geringerer Octanzahl zu ermöglichen. Das Produktspektrum des Crackens ist dann günstig, wenn das Produkt viel Wasserstoff, niedere Alkene und Methan, jedoch wenig Kohlenoxid und noch weniger Kohlendioxid enthält.

Es ist bekannt, daß die aktivsten Katalysatoren für die mittels der Wärme einer partiellen Oxidation vorgenommene katalytische Crack-Reaktion die bifunktionellen, insbesondere die γ-Aluminiumoxid und Nickel(II)-oxid enthaltenden, Mischkatalysatoren (W. Ostwald: Dissertation TH Darmstadt, 1976) sind. Die sauren γ-Aluminiumoxidzentren dieser Katalysatoren katalysieren das Cracken der Kohlenwasserstoffe und die Nickel(II)-oxidzentren katalysieren die partielle Oxidation. Der Nickel(II)-oxidgehalt beträgt im allgemeinen 1 bis 10 Gew.-%. Die autothermen Reaktionsvorrichtungen arbeiten bei 550 bis 800°C, die Luftzahl beträgt 0,03 bis 0,11 und unter Atmosphärendruck ist die günstigste Katalysatorbelastung 5 bis 20 g Kohlenwasserstoff je g Katalysator und Stunde.

Bei den zur Durchführung dieses Verfahrens geeigneten Katalysatoren ist die Zusammensetzung der Katalysatorkörner praktisch in jedem Punkt der Körner identisch. Das folgt aus der Technik der Katalysatorherstellung; die oben genannten aktiven Bestandteile werden im wesentlichen durch Imprägnieren auf den Träger aufgebracht. Ein Unterschied zwischen den einzelnen Herstellungsverfahren besteht lediglich darin, daß das γ-Aluminiumoxid beim Imprägnieren als Pulver oder als Granulat vorliegen kann. Im ersteren Falle erfolgt das Formen der kompakten Teilchen nach dem Imprägnieren, im letzten Fall davor.

Unter den oben genannten Betriebsbedingungen kann in der autothermen Reaktionsvorrichtung mit solchen Vollkatalysatoren und unter Verwendung des in seinen Eigenschaften dem Benzingemisch ähnlichen n-Heptanes eine Umsetzung vou 55 bis 60% erreicht werden. Die Selektivität des Katalysators für die einzelnen Produkte ist in der folgenden Tabelle 1 angegeben.

**Tabelle 1**

Katalysatoreigenschaften eines bekannten Vollkatalysators bei verschiedenen Luftzahlen

| Umsetzung in % | 57,0 | 60,8 |
|---|---|---|
| Luftzahl | 0,083 | 0,103 |
| Selektivität in % | | |
| Methan | 3,5 bis 3,9 | 3,3 bis 3,5 |
| Äthen | 13,4 bis 14,5 | 9,8 bis 10,7 |
| Propen | 8,6 bis 9,4 | 7,4 bis 8,1 |
| Butene | 3,6 bis 4,0 | 3,6 bis 4,0 |
| Pentene | 2,2 bis 2,4 | 2,2 bis 2,4 |
| Hexene | 2,9 bis 3,2 | 1,8 bis 2,0 |
| Alkane mit 2 bis 6 Kohlenstoffatomen | 34,1 bis 35,4 | 40,0 bis 41,5 |
| Kohlenoxyd | 12,9 bis 14,0 | 13,2 bis 14,2 |
| Kohlendioxyd | 9,1 bis 9,7 | 12,4 bis 13,0 |
| Aldehyde und Säuren | 6,9 bis 7,5 | 8,1 bis 8,9 |
| Wasserstoff | 7,0 bis 7,6 | 5,5 bis 6,0 |

Die Ausdrücke Butene, Pentene und Hexene umfassen in der obigen Tabelle 1 und in der weiter unten folgenden Tabelle 2 sowohl das jeweilige n-Alken als auch jeweilige Isoalkene.

Aus der obigen Tabelle 1 geht hervor, daß das Crackprodukt wenig Wasserstoff und niedere Alkene, dafür jedoch viel Alkane mit mehr als 1 Kohlenstoffatom und Kohlendioxid enthielt.

Dieses bei der Verwendung von Vollkatalysatoren eintretende wenig befriedigende Ergebnis ist in erster Linie auf die im Inneren der Katalysatorteilchen verhältnismäßig weit vom deren Oberfläche entfernt ablaufenden und vor allem Kohlenoxid, Kohlendioxid und Wasser erzeugenden Reaktionen zurückzuführen, die von den im Inneren der Katalysatorteilchen herrschenden Wärmegradienten ausgelöst werden. Die gewünschten Produkte (niedere Olefine, Methan und Wasserstoff) entstehen in erster Linie an der Oberfläche der Teilchen.

Der Erfindung liegt die Aufgabe zugrunde, unter Behebung der Nachteile der γ-Aluminiumoxid und Nickel(II)-oxid enthaltenden bekannten Vollkanalysatoren γ-Aluminiumoxid und Nickel(II)-oxid enthaltende Katalysatoren, welche in Bezug auf Wasserstoff und niedere Alkene hochselektiv sind und mit welchen das Entstehen von Kohlendioxid vermindert und die Umsetzung erhöht ist, sowie ein Verfahren zu ihrer Herstellung und ihre Vorwendung zu schaffen.

Diese Aufgabe wird durch die Erfindung durch einen bifunktionellen Katalysator gemäß dem Patentanspruch 1 gelöst.

In der DE-C 22 50 200 wird ein Trägerkatalysator für die Reinigung von Abgasen von Kraftfahrzeugen und Industrieanlagen beschrieben, welcher aus einem inerten Träger, auf dem Aktivüberzüge aufgebracht sind, besteht. Die Aktivüberzüge können aus γ-Aluminiumoxid und Nickel(II)oxid bestehen.

Die US-A 4 255 253 beschreibt Katalysatoren für die Wasserstoffverarbeitung von Kohlenwasserstoffen, insbesondere zur Herabsetzung des Schwefel-, Stickstoffund Metallgehaltes von Kohlenwasserstoffausgangsmaterialien. Diese Katalysatoren bestehen aus einem inneren Kern aus einem inerten Material mit einem darauf aufgebrachten Aktivüberzug, der sich aus Oxiden von Aluminium und Nickel zusammensetzen kann.

Aluminiumoxidträger mit einem darauf aufgebrachten Aktivüberzug aus Oxiden von Nickel und Aluminium. Dieser Katalysator dient zur Katalyse von Reaktionen von Kohlenwasserstoffen mit Wasserdampf.

Die Erfindung beruht demgegenüber auf der überraschenden Erkenntnis, daß, wenn ein bekannter bifunktioneller Katalysator mit einem auf einem inerten Träger aufgebrachten, aus γ-Aluminiumoxid und Nickel(II)oxid bestehenden Aktivüberzug dann für eine autotherme und selektive Zersetzung von Treibstoffen, d.h. einen anderen Verwendungszweck als in den vorstehend diskutierten Literaturstellen beschrieben, eingesetzt werden kann, wenn der Nickel(II)oxidgehalt des Aktivüberzugs zwischen 0,5 und 10 Gew.-% liegt und die Stärke der Überzugsschicht 5 bis 20 % des Kerndurchmessers beträgt. Erfindungsgemäß ist es ferner von Bedeutung, daß der Aktivüberzug an dem inerten Träger ohne Bindemittel anhaftet, was im Falle der US-A 4 255 253 vorgesehen ist. Ein weiteres nicht unwesentliches Kriterium für den erfindungsgemäßen Katalysator ist die Tatsache, daß der Kern, der vorzugsweise aus α-Aluminiumoxid besteht, eine gute Wärmeleitfähigkeit besitzt. Daher ist eine über eine große spezifische Oberfläche verfügende Tonerde, wie sie gemäß der US-A 4 255 253 eingesetzt werden kann, erfindungsgemäß nicht geeignet.

Wie bereits erwähnt, sind erfindungswesentlich neben dem spezifizierten Nickelgehalt das Verhältnis zwischen dem Kerndurchmesser und dem Durchmesser des Aktivüberzugs. Werden die erfindungsgemäß postulierten Verhältnisse nicht eingehalten, dann kann die erwünschte katalytische Wirkung, d.h. die Selektivität in bezug auf die gewünschten Produkte bei erhöhter Umsetzung bei der autothermen Zersetzung von Treibstoffen nicht erzielt werden.

Vorteilhaft besteht der kompakte inerte Kern des erfindungsgemäßen bifunktionellen Katalysators aus α-Aluminiumoxid und/oder Mullit und/oder gebranntem keramischem Material und/oder Magnesiumoxid und/oder Magnesit, wobei α-Aluminiumoxid besonders bevorzugt ist. Vorzugsweise ist der inerte kompakte zentrale Kern kugelförmig.

Es ist auch bevorzugt, daß der Nickel(II)-oxidgehalt des Überzuges [der aktiven Schicht] 1,6 bis 3,2 Gew.-% beträgt.

Ferner ist vorzugsweise der Anteil des Überzuges (der aktiven Schicht), bezogen auf den inerten kompakten Kern, 5 bis 200 Gew.-%, insbesondere 10 bis 100 Gew.-%.

Die erfindungsgemäßen Katalysatoren bringen gegenüber denen des Standes der Technik die Vorteile der höheren Selektivität in Bezug auf Wasserstoff und niedere Alkene und auch Methan sowie das verminderte Entstehen von Kohlendioxid und eine erhöhte Umsetzung bei ihrer Verwendung mit sich. Die erfindungsgemäßen Schalenkatalysatoren haben ferner die günstige Eigenschaft, infolge der verhältnismäßig guten Wärmeleitfähigkeit des inerten kompakten Kernes und der geringen Dicke der aktiven Schicht einen Reaktionsablauf unter praktisch isothermen Bedingungen zu ermöglichen.

Die erfindungsgemäßen Katalysatoren können in der Weise hergestellt werden, daß auf katalytisch inaktiven Trägerteilchen entsprechender Größe und Form und aus entsprechendem Material, vorzugsweise auf kugelförmigen Teilchen, nach einem an sich bekannten Verfahren, zum Beispiel in einem Dragierkessel, einer Drehtrommel oder auf einem Granulierteller, eine verhältnismäßig dünne, meistens 0,1 bis 0,5 mm dicke, Schicht aus γ-Aluminiumoxid und Nickel(II)-oxid ausgebildet wird. Diese Schicht bestimmt, bis zu welcher Tiefe das Katalysatorteilchen katalytisch aktiv ist.

Gegenstand der Erfindung ist daher auch ein Verfahren zur Herstellung der erfindungsgemäßen Katalysatoren, welches dadurch gekennzeichnet ist, daß auf inerten Trägerteilchen mit Durchmessern von 1 bis 6 mm ein aus γ-Aluminiumoxid und Nickel(II)-oxid bestehender Überzug (aktive Schicht) in einer Dicke von 5 bis 20% des Kerndurchmessers in an sich bekannter Weise ausgebildet wird sowie die überzogenen Trägerteilchen bei 120 bis 250° C wärmebehandelt und schließlich bei Temperaturen bis 540° C geglüht werden.

Vorzugsweise werden als inerte Trägerteilchen solche mit Durchmessern von 1 bis 3 mm verwendet.

Vorzugsweise wird die Nickel(II)-oxidschicht zumindest zum Teil aus einem wasserlöslichen Nickelsalz, zum Beispiel dem Nitrat oder Formiat, gebildet. Dabei wird als Nickelsalz vorzugsweise Nickelnitrat zweckmäßig in Form von Nickel(II)-nitrathexahydrat, verwendet.

Eine Möglichkeit zur Ausbildung der aktiven Schicht besteht darin, das mit einer Lösung eines Nickelsalzes behandelte γ-Aluminiumoxid vor dem Aufbringen auf den Kern einer Wärmebehandlung zu unterziehen, wobei das Nickel(II)-oxid entsteht.

Für die Selektivität und die mechanische Festigkeit des Katalysators ist es jedoch besser, die Bildung des Nickel(II)-oxides ganz oder zum Teil nach dem Aufbringen der aktiven Schicht durchzuführen. Der noch feuchte Katalysator wird in einem geschlossenen Raum bei 120 bis 250° C wärmebehandelt, wobei der zweite aktive Bestandteil, das Nickel(II)-oxid entsteht und gleichzeitig ohne Zusatz von Bindemitteln eine mechanisch stabile Schicht gebildet wird. Die Zersetzung des Nickelsalzes zu Nickel(II)-oxid wird in einem Glühofen bei dementsprechender Temperatur vervollständigt.

Nach einer speziellen vorteilhaften Ausführungsform des erfindungsgemäßen Verfahrens werden zum Ausbilden des aus γ-Aluminiumoxid und Nickel(II)-oxid bestehenden Überzuges die inerten Trägerteilchen abwechselnd mit einer Nickelsalzlösung besprüht und mit einem aus γ-Aluminiumoxid und Nickel(II)-oxid oder

aus γ-Aluniniumoxid bestehenden Pulver mit Teilchengrößen unter 100 μm bestreut.

Nach einer anderen speziellen vorteilhaften Ausführungsform des erfindungsgemäßen Verfahrens werden zum Ausbilden des aus γ-Aluminiumoxid und Nickel(II)-oxid bestehenden Überzuges die inerten Trägerteilchen mit einer aus γ-Aluminiumoxid und Nickel(II)-oxid und einer Nickelsalzlösung bereiteten Suspension besprüht.

Vorzugsweise wird das Nickelsalz in Forme ner wäßrizen Lösung mit einer Konzentration von 2 bis 30 Gew.-%, insbesondere 2,4 bis 15 Gew.-%, zum Aufbringen auf die inerten Trägerteilchen eingesetzt.

Zum Glühen der wärmebehandelten überzogenen Trägerteilchen wird vorzugsweise eine Aufheizgeschwindigkeit von 40 bis 60°C/Stunde angewandt.

Gegenstand der Erfindung ist auch die Verwendung der erfindungsgemäßen Katalysatoren zur autothermen Zersetzung von Treibstoffen beziehungsweise zu ihrer ÿberführung in eine Gasphase, insbesondere durch katalytisches Cracken durch partielle Oxidation.

Die Erfindung wird an Hand der folgenden Beispiele näher erläutert.

**Beispiel 1**

a) Herstellung eines etwa 2 Gew.-% Nickel(II)-oxid enthaltenden Überzugspulvers

Es wurden 15 g Nickel(II)-nitrathexahydrat [Ni(NO$_3$)$_2$. 6 H$_2$O] in 100 cm$^3$ destilliertem Wasser gelöst. In dieser Lösung wurden 195 g γ-Aluminiumoxid suspendiert und dann wurde die Suspension bei 105°C zur Trockne eingedampft. Die erhaltene feste Substanz wurde in einen Glühofen mit einer Aufheizgeschwindigkeit von 50°C/Stunde auf eine Temperatur von 520°C aufgeheizt und 3 Stunden lang auf dieser Temperatur gelassen. Nach dem Glühen wurde das aus γ-Aluminiumoxid und Nickel(II)-oxid bestehende feste Material in einer Mühle, in welcher die Möglichkeit der Verunreinigung durch Metalle ausgeschlossen war, zu einer Feinheit unter 100 μm gemahlen.

b) Aufbringen des ÿberzugspulvers auf die Trägerteilchen

Zum Aufbringen von 80 g des wie im vorstehenden Abschnitt a) beschrieben erhaltenen ÿberzugspulvers wurden 200 g α-Aluminiumoxidträger mit Teilchengrößen von 2,0 bis 2,5 mm in einer Granuliertrommel in rollende Bewegung gebracht. Auf die Oberfläche der Trägerteilchen wurden abwechselnd eine Nickel(II)-nitrathexahydratlösung {insgesamt 4,5 g Nickel(II)-nitrathexahydrat [Ni(NO$_3$)$_2$. 6 H$_2$O] in 80 cm$^3$ destillierten Wasser] aufgesprüht und durch ein Rüttelsieb das genannte Überzugspulver aufgestreut, bis die Schicht eine Dicke von 0,3 mm erreicht hatte. Die feuchten Katalysatorteilchen wurden in einem luftdicht verschließbaren Aluminiumgefäß 6 Stunden lang bei 120°C und dann 4 Stunden lang bei 200°C wärmebehandelt. Dann wurde der Katalysator in einem Glühofen mit einer Aufheizgeschwindigkeit von 50°C/Stunde auf 520°C aufgeheizt und bei dieser Temperatur 3 Stunden lang geglüht.

**Beispiel 2**

Es wurden in einer Wirbelschichtanlage 100 g kugelförmige α-Aluminiumoxidteilchen mit Teilchengrößen von 2,0 bis 2,5 mm mit 70°C warmer Luft in Wirbelbewegung gebracht. Aus 80 g wie im Beispiel 1, Abschnitt a) beschrieben hergestelltem Überzugspulver und einer Lösung von 4,5 g Nickel(II)-nitrathexahydrat [Ni(NO$_3$)$_2$. 6 H$_2$O] in 80 cm$^3$ destillierten Wasser wurde eine Suspension hergestellt und diese wurde von unten mit Hilfe eines durch den schichttragenden Rost hindurch in die Wirbelschicht hineinragenden pneumatischen Zerstäubers auf die α-Aluminiumoxidträgerteilchen aufgebracht, bis die Schicht eine Dicke von 0,3 mm erreicht hatte. Der feuchte Katalysator wurde im folgenden in der im Beispiel 1 beschriebenen Weise behandelt.

**Beispiel 3**

Es wurden 200 g α-Aluminiumoxidteilchen mit Teilchengrößen von 2,0 bis 2,5 mm in einer Granuliertrommel in rollende Bewegung gebracht. Auf die Oberfläche der Teilchen wurden abwechselnd eine Nickel(II)-nitrathexahydratlösung aufgesprüht und pulverförmiges γ-Aluminiumoxid aufgestreut {Gesamtmengen: 9,7 g Nickel(II)-nitrathexahydrat [Ni(NO$_3$)$_2$. 6 H$_2$O) in 100 cm$^3$ destilliertem Wasser und 97,5 g γ-Aluminiumoxid}. Die weitere Behandlung des Katalysators wurde in der im Beispiel 1 beschriebenen Weise durchgeführt.

**Beispiel 4**

Es wurden in einer Wirbelschichtanlage 100 g Magnesiumoxidträgerteilchen mit Teilchengrößen von 2,0 bis 2,5 mm mit 70°C warmer Luft in Wirbelbewegung gebracht. Aus 49 g γ-Aluminiumoxid und einer Lösung von 4,9 g Nickel(II)-nitrathexahydrat [Ni(NO$_3$)$_2$. 6 H$_2$O] in 200 cm$^3$ destilliertem Wasser wurde eine Suspension bereitet und diese mit Hilfe des im Beispiel 2 beschriebenen pneumatischen Zerstäubers auf die Magnesiumoxidträgerteilchen aufgesprüht. Der feuchte Katalysator wurde in der im Beispiel 1 beschriebenen Weise weiterbehandelt.

Die Katalysatoreigenschaften des nach dem Beispiel 1 hergestellten Katalysators (die der anderen Beispiele haben ähnliche Eigenschaften) sind in der folgenden Tabelle 2 zusammengestellt.

**Tabelle 2**

Katalysatoreigenschaften des erfindungsgemäßen Schalenkatalysators des Beispieles 1 bei verschiedenen Luftzahlen

| Umsetzung in % | 61,2 | 66,6 |
|---|---|---|
| Luftzahl | 0,083 | 0,103 |
| Selektivität in % | | |
| Methan | 4,4 bis 4,8 | 4,2 bis 4,6 |
| Äthen | 15,7 bis 16,4 | 12,4 bis 13,3 |
| Propen | 18,2 bis 19,2 | 14,4 bis 15,3 |
| Butene | 4,3 bis 4,7 | 3,2 bis 3,5 |
| Pentene | 9,2 bis 10,0 | 5,8 bis 6,4 |
| Hexene | 3,3 bis 3,6 | 2,4 bis 2,6 |
| Alkane mit 2 bis 6 Kohlenstoffatomen | 15,4 bis 16,2 | 20,3 bis 21,4 |
| Kohlenoxyd | 15,9 bis 16,7 | 16,6 bis 17,5 |
| Kohlendioxyd | 7,7 bis 8,2 | 10,1 bis 10,8 |
| Aldehyde und Säuren | 5,2 bis 5,7 | 7,5 bis 8,1 |
| Wasserstoff | 9,1 bis 10,0 | 6,0 bis 6,5 |

Aus einem Vergleich der vorstehenden Tabelle 2 mit der weiter oben stehenden Tabelle 1 geht hervor, daß mit dem erfindungsgemäßen Schalenkatalysator eine um etwa 5% erhöhte Umsetzung als mit dem bekannten Vollkatalysator erreicht werden konnte und gleichzeitig die Selektivität des erfindungsgemäßen Schalenkatalysators in Bezug auf Methan um etwa 25 bis 30%, bezogen auf die Selektivität des bekannten Vollkatalysators, in Bezug auf Propen um etwa 100%, bezogen auf die Selektivität des bekannten Vollkatalysators, in Bezug auf Äthen um etwa 15 bis 25%, bezogen auf die Selektivität des bekannten Vollkatalysators, und in Bezug auf Wasserstoff um etwa 10 bis 30%, bezogen auf die Selektivität des bekannten Vollkatalysators, besser als die des bekannten Vollkatalysators war, während der unerwünschte Kohlendioxidgehalt im mit dem erfindungsgemäßen Schalenkatalysator hergestellten Produkt um etwa 15 bis 20% geringer, bezogen auf den Kohlendioxidgehalt im mit den bekannten Vollkatalysator hergestellten Produkt, war.

**Patentansprüche**

1. Katalysator mit einem auf einem inerten. kompakten Kern als Träger aufgebrachten γ-Aluminiumoxid- und Nickel(II)-oxid-Aktivüberzug, dadurch gekennzeichnet, daß der Katalysator zur autothermen und selektiven Zersetzung von Treibstoffen einen Nickel(II)-oxidgehalt des aktiven Überzugs von 0,5 bis 10 Gew.-% und eine Stärke der Überzugsschicht von 5 bis 20% des Trägerdurchmessers aufweist.

2. Katalysator nach Anspruch 1, dadurch gekennzeichnet, daß der inerte Träger aus α-Aluminiumoxid und/oder Mullit und gebranntem keramischen Material und/oder Magnesiumoxid und/oder Magnesit besteht.

3. Verfahren zur Herstellung eines Katalysators nach den Ansprüchen 1 bis 2, dadurch gekennzeichnet, daß man auf inerten Trägerteilchen mit Durchmessern von 1 bis 6 mm einen aus γ-Aluminiumoxid und Nickel(II)oxid bestehenden Aktivüberzug in einer Dicke von 5 bis 20 % des Kerndurchmessers in an sich bekannter Weise ausbildet und die überzogenen Trägerteilchen bei 120 bis 250°C wärmebehandelt und dann bei Temperaturen bis 540°C glüht.

4. Verfahren nach Anspruch 3, dadurch gekennzeichnet, daß inerte Trägerteilchen mit einem Durchmesser von 1 bis 3 mm verwendet werden.

5. Verfahren nach Anspruch 3 oder 4, dadurch gekennzeichnet, daß man zur Ausbildung des aus γ-Aluminiumoxid und Nickeloxid bestehenden Aktivüberzugs die inerten Trägerteilchen abwechselnd mit einer Nickelsalzlösung besprüht und mit einem aus γ-Aluminiumoxid und Nickel(II)oxid oder aus γ-Aluminiumoxid bestehenden Pulver mit Teilchengrößen unter 100 μm bestreut.

6. Verfahren nach Anspruch 3 oder 4, dadurch gekennzeichnet, daß man zum Ausbilden des aus γ-Aluminiumoxid und Nickel(II)oxid bestehenden Überzugs die inerten Trägerteilchen mit einer aus γ-Aluminiumoxid und Nickeloxid und einer Nickelsalzlösung bereiteten Suspension besprüht.

7. Verfahren nach den Ansprüchen 3 bis 6, dadurch gekennzeichnet, daß man als Nickelsalz Nickelnitrat verwendet.

8. Verwendung eines Katalysators nach den Ansprüchen 1 bis 3 zur autothermen Zersetzung von Treibstoffen bzw. zu ihrer Überführung in eine Gasphase.

**Claims**

1. A catalyst having an inert compact core as support coated with an active γ-alumina and nickel(II)-oxide coating, characterized in that the catalyst for the autothermal and selective degradation of fuels has a nickel(II)oxide content of the active coating of 0,5 to 10 % by weight and a thickness of the coating layer of 5 to 20 % of the support diameter.

2. A catalyst according to claim 1, characterized in that the inert support consists of α-alumina and/or mullite and/or calcined ceramic material and/or magnesia and/or magnesite.

3. A process for preparing a catalyst according to the claims 1 to 2, characterized in that in a manner known per se on inert support particles having diameters of 1 to 6 mm an active coating of γ-alumina and nickel(II)-oxide having a thickness of 5 to 20 % of the core diameter is formed, and the coated support particles are heat-treated at 120 to 250°C and subsequently annealed at temperatures up to 540°C.

4. A process according to claim 3, characterized in that inert support particles having a diameter of 1 to 3 mm are used.

5. A process according to claim 3 or 4, characterized in that for the formation of an active coating of γ-alumina and nickel oxide the inert support particles alternatingly are sprayed with a nickel salt solution and are dusted with a powder having particle sizes below 100 μm of γ-alumina and nickel(II)-oxide or of γ-alumina.

6. A process according to claim 3 or 4, characterized in that for the formation of the coating of γ-alumina and nickel(II)-oxide the inert support particles are sprayed with a suspension prepared of γ-alumina and nickel oxide and a nickel salt solution.

7. A process according to claims 3 to 6, characterized in that as nickel salt nickel nitrate is used.

8. The use of a catalyst according to the claims 1 to 3 for the autothermal degradation of fuels and their conversion into a gas phase, respectively.

# 0 075 314

**Revendications**

1. Catalyseur comportant une couche active d'oxyde d'aluminium γ et d'oxyde nickel (II) appliquée à un noyau compact constituant un support, caractérisé en ce que, pour produire une décomposition autothermique et sélective de carburants, ce catalyseur présente une teneur en oxyde nickel (II) de sa couche active de 0,5 à 10 % en poids et en épaisseur de sa couche active de 5 à 20 % du diamètre du support.

2. Catalyseur selon la revendication 1, caractérisé en ce que le support inerte est constitué par de l'oxyde d'aluminium α et/ou de la mullite et/ou une matière céramique cuite et/ou de l'oxyde de magnésium et/ou de la magnésite.

3. Procédé de préparation d'un catalyseur selon les revendications 1 et 2, caractérisé en ce qu'on forme, de façon connue en soi, sur des fragments de support inertes de 1 à 6 mm de diamètre, une couche active constituée par de l'oxyde d'aluminium γ et de l'oxyde nickel (II) à une épaisseur de 5 à 20 % du diamètre du noyau, et l'on traite thermiquement les fragments de support munis de la couche à une température de 120 à 250°C, puis on les calcine à des températures pouvant atteindre 540°C.

4. Procédé selon la revendication 3, caractérisé en ce qu'on utilise des fragments de support inertes d'un diamètre de 1 à 3 mm.

5. Procédé selon la revendication 3 ou 4, caractérisé ce que, pour former la couche active comprenant de l'oxyde d'aluminium γ et de l'oxyde de nickel, on applique aux fragments de support inertes, alternativement, par aspersion une solution de sel de nickel et par saupoudrage, une poudre constituée par de l'oxyde d'aluminium γ et de l'oxyde nickel (II) ou par de l'oxyde d'aluminium γ, dont les particules ont des dimensions granulométriques inférieures à 100 μm.

6. Procédé selon la revendication 3 ou 4, caractérisé en ce que, pour former la couche comprenant de l'oxyde d'aluminium γ et de l'oxyde nickel (11), on applique par aspersion aux fragments de support inertes une suspension préparée à partir d'oxyde d'aluminium γ et d'oxyde de nickel et d'une solution de sel de nickel.

7. Procédé selon les revendications 3 à 6, caractérisé en ce qu'on utilise, comme sel de nickel, du nitrate de nickel.

8. Utilisation d'un catalyseur selon les revendications 1 à 3 pour la décomposition autothermique de carburants, ou pour les faire passer en phase gazeuse.

8